# EUROPEAN PATENT APPLICATION

(11) **EP 4 831 676 A1**
(43) Date of publication of application: **28.10.2026**
(21) Application number: 26163855.5
(22) Date of filing: 11.03.2026
(51) Int. Cl.: G01S 3/04, G01S 3/18, G01S 3/30, G08G 5/57, G01S 3/46

(54) **REACTIONARY POSITIONING SYSTEM**

(30) Priority: 25.04.2025 US 202519190504
(71) Applicant: L3Harris Global Communications, Inc., Melbourne, FL 32919 (US)
(72) Inventor: BUDUSON, James, North Chili, 14514 (US); HOOD, James J., Melbourne, 32919 (US); BURKE, Peter, Hilton, 14468 (US); GERLACH, Timothy, Melbourne, 32919 (US)
(74) Representative: Schmidt, Steffen J.

(57) **Abstract**

A reactionary positioning system (10) includes at least two directional antennas (12) oriented at an offset angle and receiving RF signals. A radio receives the RF signal from each of the directional antennas (S1) and is configured to calculate a power spectral density of the RF signal (S2). A circuit is configured to receive and process the power spectral densities (S2). The circuit is programmed to measure a differential amplitude (S3) between each of the directional antennas (12) to determine a general direction of a source of the RF signal.

## Description

### CROSS-REFERENCES TO RELATED APPLICATIONS

### STATEMENT REGARDING FEDERALLY SPONSORED RESEARCH OR DEVELOPMENT

### BACKGROUND

The invention relates to a reactionary positioning system and, more particularly, a reactionary positioning system that utilizes amplitude differential among other things to identify a source signal direction.

Unmanned Aerial Vehicles (UAVs), commonly referred to as Unmanned Aircraft Systems (UAS), are increasingly deployed for intelligence, surveillance, and reconnaissance (ISR), first-person view (FPV) strike missions, and kinetic engagements. However, these systems are highly vulnerable in radio frequency (RF)-contested environments, where adversaries employ RF detection and jamming to neutralize them.

A typical adversary leverages RF direction-finding (DF) and jamming to detect, track, and disrupt UAS operations. These countermeasures force UAVs to return to their launch point (if equipped with a failsafe return-to-home feature), lose operator control, rendering them ineffective, and/or continue mission autonomously but without updated operator input, reducing effectiveness.

Recent global conflicts, including those in Ukraine and the Red Sea, have demonstrated the effectiveness of jamming in neutralizing UAV operations, driving increased investment in Counter-UAS (C-UAS) technologies. Current C-UAS solutions are primarily ground-based and focus on RF detection, jamming, and kinetic interception. One C-UAS concern is detecting UAVs visually via ISR assets, which relay target locations to FPV strike drones for kinetic engagement.

While both UAS and C-UAS (ground-based solutions) exist, there is no Unmanned Airborne Counter to Counter-UAS (UAC-CUAS). Current defenses rely on overwhelming numbers of UAVs, which is costly and inefficient, or on autonomous navigation, which remains largely ineffective in combat environments. There is a need for an airborne countermeasure capable of defeating C-UAS threats while operating effectively in an RF-contested battlespace.

Existing RF direction-finding techniques used for UAS detection and tracking are too large, heavy, and expensive for integration into Group 1 UAVs and kinetic UAS platforms. Some limitations include pseudo doppler shift direction finding, which requires multiple antennas to overcome symmetry limitations in signal detection; correlated interferometry, which can be computationally demanding, requiring high-end processing hardware unsuitable for small UAVs; Watson-Watt Technique, which is limited by angular accuracy constraints in high-mobility airborne environments; beam steering, which suffers from bandwidth limitations and high cost thereby restricting deployment on lightweight UAV platforms.

There is thus a need for a small, lightweight, and cost-effective UAV platform capable of operating effectively in RF-contested environments while countering adversarial C-UAS threats.

### SUMMARY

The described embodiments aim to address these limitations by introducing an innovative airborne countermeasure that integrates RF resilience, advanced direction-finding, and real-time engagement capabilities in a form suitable for Group 1 and kinetic UAVs.

In some embodiments, the system utilizes at least two wideband directional antennas, each pointed or oriented at an angle offset from center. A controller or control circuit switches between each antenna, and a radio such as a software defined radio (SDR) is used to feed the power spectral density (PSD) results into the control circuit. The control circuit measures the differential amplitude between each antenna to determine a general direction. The amplitude differential is mapped against the antenna pattern and offset angle to provide a more accurate direction estimate. The control circuit/SDR can also measure the pseudo doppler shift of an undesired signal to provide an additional degree of measurement for the direction estimation.

In an exemplary embodiment, a reactionary positioning system includes at least two directional antennas that each receive an RF signal, where each of the directional antennas is oriented at an offset angle. A radio receiving the RF signal from each of the directional antennas is configured to determine a power spectral density of the RF signal received from each of the directional antennas. A circuit that is configured to receive and process the power spectral densities is configured to measure a differential amplitude between each of the directional antennas to determine a general direction of a source of the RF signal.

The circuit may be configured to map the differential amplitude against an antenna pattern and the offset angle of each of the directional antennas.

One of the radio and the circuit may be configured to measure a pseudo doppler shift of the RF signal.

The offset angle may be 2.5-65 degrees relative to a vertical line between the pair of directional antennas. The offset angle may be a function of an antenna pattern of the directional antennas. In some embodiments, the offset angle may be 30 degrees relative to a vertical line between the directional antennas.

The radio may be a software defined radio. The radio may comprise the circuit.

In another exemplary embodiment, an unmanned aerial system includes an engine, a flight control circuit in communication with the engine, a communication system in communication with the flight control circuit, and the reactionary positioning system of the described embodiments in communication with at least one of the communication system and the flight control circuit. The reactionary positioning system is configured to instruct the flight control circuit based on the general direction of the source of the RF signal.

The flight control circuit may be configured to effect autonomous flight based on signals from the reactionary positioning system.

In still another exemplary embodiment, a method of determining a signal direction using the reactionary positioning system of the described embodiments includes the steps of receiving an RF signal with each of the directional antennas, wherein each of the directional antennas is oriented at an offset angle; the radio receiving the RF signal from each of the directional antennas and calculating a power spectral density of the RF signal; and the circuit receiving and processing the power spectral densities and measuring a differential amplitude between each of the directional antennas to determine a general direction of a source of the RF signal.

### BRIEF DESCRIPTION OF THE DRAWINGS

These and other aspects and advantages will be described in detail with reference to the accompanying drawings, in which:
FIG. 1 is a schematic diagram of a reactionary positioning system according to the described embodiments;
FIG. 2 shows the process carried out by the software defined radio and the control circuit; and
FIG. 3 is a schematic diagram of an unmanned aerial system incorporating the reactionary positioning system of the described embodiments.

### DETAILED DESCRIPTION

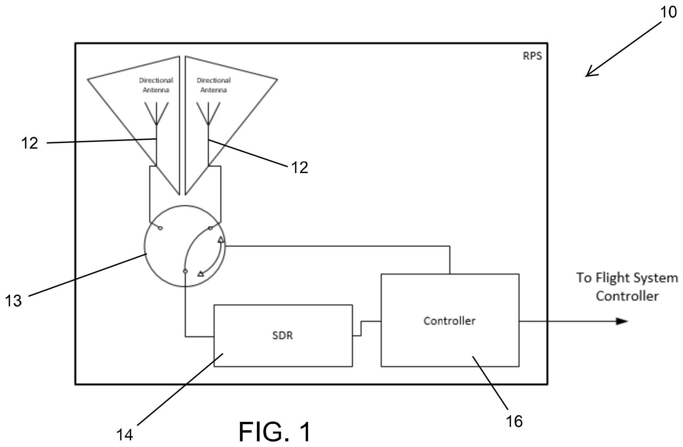

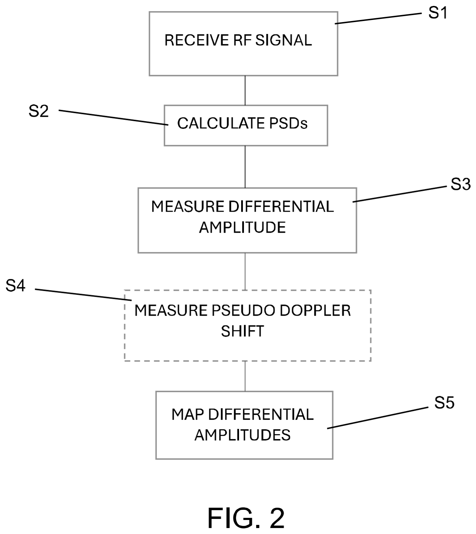

FIG. 1 is a schematic diagram of a reactionary positioning system 10 according to the described embodiments. FIG. 2 is a flow diagram of the process carried out by the system. The system 10 includes at least two directional antennas 12 that are each configured to receive an RF signal (S1 in FIG. 2). Each of the directional antennas 12 is pointed or oriented at an offset angle relative to a vertical line between the directional antennas 12. The system leverages the known radiation patterns of the signals and the differences in signal strength between the antennas to measure signal source direction.

A radio 14, such as a software defined radio (SDR), receives the RF signal from each of the directional antennas 12 and calculates power spectral densities (PSD) of the RF signals (S2). In some embodiments, the radio 14 may utilize known digital signal processing (DSP) techniques. For example, each directional antenna 12 receives an RF signal, and the SDR 14 converts the signal to baseband or an intermediate frequency (IF). An Analog-to-Digital Converter (ADC) samples the IF signal at a high rate to produce a discrete-time digital signal. Subsequently, the radio 14 may apply a known Fast Fourier Transform (FFT) to the digitized signal to convert it from the time domain to the frequency domain. The FFT reveals the power distribution of the signal over different frequencies. The PSD represents the power distribution of a signal over frequency. It is computed as: $PSD \left(f\right) = {lim}_{T \to ∞} \frac{{\left|X\left(f, T\right)\right|}^{2}}{T}$ Where:
- *X*(*f, T*) is the Fourier transform of the signal over a time window *T.*
- |*X*(*f,T*)|*²* represents the power at frequency *f.*
- The division by *T* normalizes the power over time.

The radio 14 may use Welch's Method or Periodogram Estimation to compute the PSD efficiently. Welch's Method divides the signal into overlapping segments, applies a window function, and averages the FFT magnitudes. Periodogram takes the squared magnitude of the FFT of a single signal segment. As noted, since the antennas 12 are offset, their PSDs will differ based on the direction of arrival of the signal. By analyzing the relative power levels at different frequencies, the radio can determine which antenna receives a stronger signal at a given frequency.

A circuit 16 such as a control circuit or a controller is configured to receive and process the power spectral densities. A switching circuit 13 controlled by the radio 14 or circuit 16 is configured to rapidly switch between the directional antennas 12. The circuit 16 is configured to measure a differential amplitude between each of the directional antennas 12 to determine a general direction of the source of the RF signal (S3). The circuit 16 is configured to map the differential amplitude against the antenna pattern and the offset angle of each of the directional antennas 12 (S5). The circuit 16 may be part of the radio 14.

The circuit 16 determines the general direction of an RF signal source by mapping the differential amplitudes between the offset directional antennas 12 against their antenna gain patterns and offset angles. The signal strength received by each antenna 12 varies based on the angle of arrival of the RF source. That is, the directional antennas 12 are positioned at a fixed offset angle relative to center. The RF signal arrives at the antennas 12 with different amplitudes due to their directional gain patterns. The circuit 16 measures/processes the amplitude difference between the signal received by each of the antennas 12. Each directional antenna has a known radiation pattern that defines how its gain changes with respect to the incoming signal angle of arrival. The circuit 16 stores or calculates the gain patterns and compares the measured amplitude difference with expected values for different arrival angles. Since each antenna 12 has a distinct gain response at different angles, the circuit 16 can determine an estimated arrival angle.

The offset angle of the directional antennas 12 may be a function of the respective antenna patterns of each of the antennas 12. The offset angle may be set within a few degrees with a narrow antenna pattern, with larger offset angles for wider antenna patterns. An exemplary range for the offset angle is 2.5-65 degrees relative to the vertical line between the directional antennas 12. In an exemplary embodiment, the offset angle is 30 degrees.

In some embodiments, one of the radio 14 and the circuit 16 may be configured to measure a pseudo doppler shift of the RF signal (S4). Typical pseudo doppler shift detection requires a circular array of antennas or an array of antennas on multiple planes. A variation of the pseudo doppler shift can be detected using the directional antennas 12. For example, the circuit 16 may rapidly switch between the antennas 12 via the switching circuit 13, which simulates a moving antenna system. This introduces a pseudo doppler shift as if the antennas were physically moving relative to the signal source. The received signal at each antenna has a slightly different phase due to the difference in arrival time, and the circuit 16 measures the phase difference between the signal from each antenna 12 over multiple switching cycles. The phase shift corresponds to an apparent frequency shift, thereby identifying the pseudo doppler effect.

Combining amplitude differential and pseudo doppler shift provides the system of the described embodiments with considerably lower SWaP (size, weight and power) than existing systems, without suffering from an accuracy trade off. That is, the system does not require an entire circular array of antennas, which also requires larger switching circuits. Additionally, with conventional systems, the multiple antennas require substantial real estate to function properly, resulting in larger and heavier components and requiring more power.

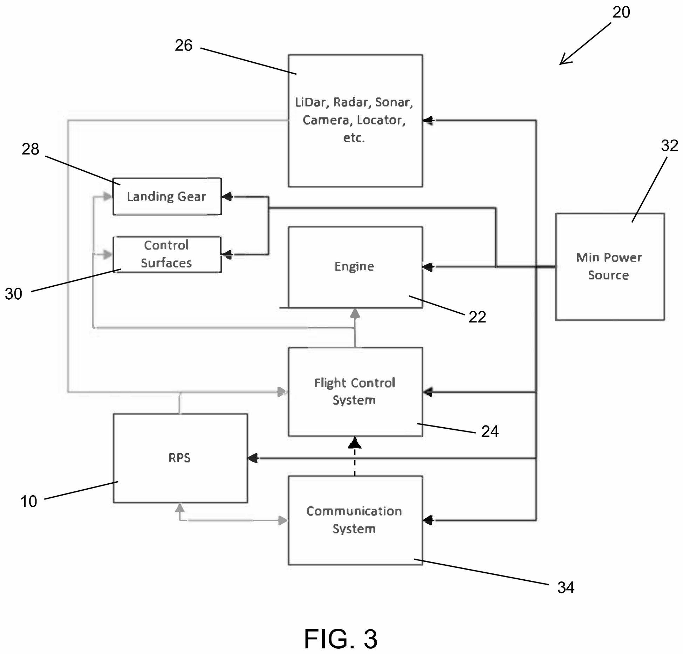

FIG. 3 is a schematic diagram of an unmanned aerial system 20. An engine 22 operates flight components, and a flight control circuit 24 communicates with the engine 22 and provides control signals for operation of the system. The system includes a multitude of sensors 26 as are well known that provide detected operating parameters to the flight control circuit 24. The system also includes landing gear 28, control surfaces 30, and a power source 32. A communication system 34 communicates with the flight control circuit 24 directly or via the reactionary positioning system 10.

The reactionary positioning system 10 of the described embodiments communicates with at least one of the communication system 34 and the flight control circuit 24. The reactionary positioning system 10 instructs the flight control circuit 24 based on the general direction of the source of the detected RF signal.

Integration with the flight control circuit 24 supports autonomous flight when a communications link is degraded or not required. Autonomous flight can guide the UAS back to airspace where the base communications link can survive a contested environment. Autonomous flight can guide a UAS to a specified target once the direction of the source is determined.

The reactionary positioning system of the described embodiments measures the differential amplitude between offset directional antennas to determine a direction of a signal source. The amplitude differential is mapped against the antenna pattern and offset angle to provide a more accurate direction estimate. In some embodiments, measuring the pseudo doppler shift using the offset antennas provides an additional degree of measurement for the direction estimation.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A reactionary positioning system comprising:
at least two directional antennas, each of the directional antennas receiving an RF signal, wherein each of the directional antennas is oriented at an offset angle;
a radio receiving the RF signal from each of the directional antennas, the radio being configured to determine a power spectral density of the RF signal received from each of the directional antennas; and
a circuit that is configured to receive and process the power spectral densities, the circuit being configured to measure a differential amplitude between each of the directional antennas to determine a general direction of a source of the RF signal.

2. A reactionary positioning system according to claim 1, wherein the circuit is configured to map the differential amplitude against an antenna pattern and the offset angle of each of the directional antennas.

3. A reactionary positioning system according to claim 1, wherein one of the radio and the circuit is configured to measure a pseudo doppler shift of the RF signal.

4. A reactionary positioning system according to claim 1, wherein the offset angle is 2.5-65 degrees relative to a vertical line between the pair of directional antennas.

5. A reactionary positioning system according to claim 4, wherein the offset angle is a function of an antenna pattern of the directional antennas.

6. A reactionary positioning system according to claim 1, wherein the offset angle is 30 degrees relative to a vertical line between the directional antennas; and/or
wherein the radio comprises a software defined radio; and/or
wherein the radio comprises the circuit.

7. An unmanned aerial system comprising:
an engine;
a flight control circuit in communication with the engine;
a communication system in communication with the flight control circuit; and
a reactionary positioning system in communication with at least one of the communication system and the flight control circuit, the reactionary positioning system comprising:
at least two directional antennas, each of the directional antennas receiving an RF signal, wherein each of the directional antennas is oriented at an offset angle;
a radio receiving the RF signal from each of the directional antennas, the radio being configured to determine a power spectral density of the RF signal received from each of the directional antennas; and
a circuit that is configured to receive and process the power spectral densities, the circuit being configured to measure a differential amplitude between each of the directional antennas to determine a general direction of a source of the RF signal,
wherein the reactionary positioning system is configured to instruct the flight control circuit based on the general direction of the source of the RF signal.

8. An unmanned aerial system according to claim 7, wherein the flight control circuit is configured to effect autonomous flight based on signals from the reactionary positioning system.

9. An unmanned aerial system according to claim 7, wherein one of the radio and the circuit is configured to measure a pseudo doppler shift of the RF signal.

10. An unmanned aerial system according to claim 7, wherein the offset angle is 2.5-65 degrees relative to a vertical line between the directional antennas.

11. An unmanned aerial system according to claim 10, wherein the offset angle is a function of an antenna pattern of the directional antennas.

12. An unmanned aerial system according to claim 7, wherein the offset angle is 30 degrees relative to a vertical line between the directional antennas.

13. A method of determining a signal direction using a reactionary positioning system including at least two directional antennas, a radio, and a circuit, the method comprising:
receiving an RF signal with each of the directional antennas, wherein each of the directional antennas is oriented at an offset angle;
the radio receiving the RF signal from each of the directional antennas and calculating a power spectral density of the RF signal; and
the circuit receiving and processing the power spectral densities and measuring a differential amplitude between each of the directional antennas to determine a general direction of a source of the RF signal.

14. A method according to claim 13, further comprising measuring, with one of the radio and the circuit, a pseudo doppler shift of the RF signal.

15. A method according to claim 13, further comprising mapping, with the circuit, the differential amplitude against an antenna pattern and the offset angle of each of the directional antennas.
